# EUROPÄISCHE PATENTSCHRIFT

(11) **EP 1 342 941 B1**
(45) Veröffentlichungstag und Bekanntmachung des Hinweises auf die Patenterteilung: **16.08.2006**
(21) Anmeldenummer: 03000898.1
(22) Anmeldetag: 16.01.2003
(51) Int. Cl.: F16H 61/18, F16H 61/24, F16H 63/30

(54) **Vorrichtung zum Erzeugen einer Gegenkraft an einer Schaltwelle**
Device for producing a counterforce on a selector shaft
Dispositif pour produire une force antagoniste pour un arbre de commande

(30) Priorität: 06.03.2002 DE 10209730
(43) Veröffentlichungstag der Anmeldung: 10.09.2003
(73) Patentinhaber: Schaeffler KG, 91074 Herzogenaurach (DE); DaimlerChrysler AG, 70546 Stuttgart (DE)
(72) Erfinder: Krämer, Klaus, 91460 Baudenbach (DE)
(74) Vertreter: Blaumeier, Jörg

(56) Entgegenhaltungen:
- EP-A- 0 849 506
- DE-A1- 10 016 364
- DE-A1- 19 520 209
- US-A- 4 583 418

## Beschreibung

### Gebiet der Erfindung

Die Erfindung betrifft ein Schaltmodul, Umfassend ein schaltwelle mit einem zu dieser festen Schwenkhebel und eine Vorrichtung zum Erzeugen einer Gegenkraft an dem Schwenkhebel, wobei die Schaltwelle zur Wahl mindestens einer Gasse in der Vorrichtung schwenkbar sowie zum Schalten wenigstens eines Ganges in der Gasse zur Vorrichtung längs verschiebbar ist und wobei der Schwenkhebel bei der Wahl der Gasse zumindest zeitweise einen um eine Schwenkachse in zwei Schwenkrichtungen schwenkbaren sowie mit einer Rampe versehenen Schlepphebel, gegen an der Rampe umgesetzte sowie verstärkte Federkräfte, beaufschlagt.

### Hintergrund der Erfindung

Ein derartiges Schaltmodul ist in DE 100 16 364 A1 beschrieben. Es ist ein Wähl- und Schaltmodul für ein Handschaltgetriebe, bei dem insbesondere auch eine Gegenkraft erzeugt werden kann, dargestellt. Es ist eine Vorrichtung nach dem Oberbegriff des Anspruchs 1 beschrieben, wobei eine Kontur auf einem Schlepphebel ausgeführt ist. Auf der Kontur läuft eine Rolle, die auf einem Schwenkhebel, der mit der Schaltwelle drehfest verbunden ist, angeordnet ist. Die Rolle, die als ein Rastelement interpretiert werden kann, ist nicht dem Schlepphebel nachgeschaltet, sondern unmittelbar auf dem Schwenkhebel angeordnet.

Ein weiteres Schaltmodul ist in EP 0 849 506 A1 beschrieben. Es ist das Schaltschema für ein Sechsganggetriebe dargestellt. Drei nebeneinanderliegende Gassen sind für das Schalten der sechs Vorwärtsgänge vorgesehen. In einer vierten Gasse wird der Rückwärtsgang geschaltet. Ein in das Schaltschema skizziertes Diagramm zeigt den Verlauf der Wählkraft in Abhängigkeit des Wählweges. Eine Bewegung entlang der Abszisse zwischen den einzelnen Gassen entspricht dabei dem Schwenken der Schaltwelle. Wählkräfte werden mittels der beschriebenen Vorrichtung bei einer Bewegung aus der Neutralstellung (Schaltgasse dritter und vierter Gang) nach rechts in die Schaltgasse des fünften und sechsten Ganges sowie aus der Neutralstellung heraus nach links in die Schaltgasse des ersten und zweiten Ganges hinein und darüber hinaus beim Einwählen in die Gasse des Rückwärtsganges erzeugt.

Beim Einwählen in die Gasse des Rückwärtsganges steigt die Wählkraft sprungartig an und signalisiert dem Bediener das Wählen des Rückwärtsganges. Dem Bediener wird mittels der am Schalthebel deutlich ansteigenden Schaltkraft beim Anwählen der Gasse des Rückwärtsganges signalisiert, dass er im Begriff ist, den Rückwärtsgang einzulegen. Die Orientierung des Bedieners an dem Schalthebel ist damit erleichtert. Das mit der ansteigenden Wählkraft abgegebene Signal an den Bediener wird insbesondere genutzt, um den Bediener vor unbeabsichtigten Wechseln aus einer Gasse der Vorwärtsgänge in die Gasse für den Rückwärtsgang zu warnen. Diese sogenannte Schlagsperre wirkt bei unbeabsichtigtem Wählen aber auch bei beabsichtigtem Wählen Gasse des Rückwärtsganges. Die Wählkraft ist in dem Moment wesentlich höher als die Kräfte, die beim Wählen der Gassen der Vorwärtsgänge am Schaltknauf auftreten. Nach dem Überwinden der erhöhten Wählkraft sinkt die Betätigungskraft wieder auf ein normales Niveau.

Die Wählkräfte am Schalthebel sind mittels einer Vorrichtung zum Erzeugen einer Gegenkraft an der Schaltwelle erzeugt. Die Schaltwelle ist für das Wählen der Gassen schwenkbar und für das Schalten von einem oder zwei Gängen in der Gasse längsverschiebbar in einem Gehäuse eines Getriebes aufgenommen. An der Schaltwelle sind Schaltfinger befestigt, von denen wahlweise einer beim Wählen in eine Schaltschiene oder Schaltschwinge eingreift und von denen wahlweise einer beim Schalten eine Schiebemuffe betätigt. Die schwenkende Schaltwelle betätigt einen Schwenkhebel. Die längsbewegte Schaltwelle bewegt sich relativ zu dem längs festen Schwenkhebel. Der Schwenkhebel steht mit mehreren Schlepphebeln in einer Wirkverbindung.

Einer der Schlepphebel ist für die Erzeugung einer erhöhten Wählkraft beim Wählen der Gasse des Rückwärtsganges vorgesehen. Der Schlepphebel ist um einen Schwenkpunkt schwenkbar an dem Gehäuse befestigt. Eine Feder spannt den Schlepphebel gegen eine Rolle an dem Schwenkhebel vor und greift dazu am Schlepphebel an. An dem Schlepphebel ist eine Rampe ausgebildet. Der beim Wählen der Gasse des Rückwärtsganges gegen den Schlepphebel geschwenkte Schwenkhebel wirkt auf den Schlepphebel. Der Schlepphebel bewegt sich gegen den Widerstand der Feder um den Schwenkpunkt. Dem Schwenkhebel wird ein Widerstand entgegengesetzt, der die Betätigungskraft am Schalthebel erhöht. Der Widerstand ist durch eine Kraft erzeugt, die von der Kennlinie der Feder und von dem Hebelverhältnis aus dem Abstand der Rolle zu dem Schwenkpunkt und dem Abstand der Feder zu dem Schwenkpunkt bestimmt ist. Die Rolle an dem Schwenkhebel rollt dabei auf dem Schlepphebel ab, trifft auf die Rampe und steigt an der Rampe auf. Die Kraft der Feder ist aufgrund des Widerstandes an der Rampe verstärkt. Der Wählkraftverlauf steigt an. Mit der Kraft der Feder, durch die Hebelverhältnisse in dem Hebelsystem Schwenkhebel - Schlepphebel und durch den Anstieg der Rampe ist der Wählkraftverlauf am Schalthebel beim Wählen der Gasse des Rückwärtsganges festgelegt.

### Zusammenfassung der Erfindung

Zu dem Zeitpunkt an dem die Erfindung gemacht wurde, bestand die Aufgabe darin, ein Schaltmodul, umfassend eine Schaltwelle und eine Vorrichtung zum Erzeugen einer Gegenkraft an der Schaltwelle, zu schaffen. Die Vorrichtung lässt sich kostengünstig fertigen und in vormontierte Schaltmodule integrieren. Aufwändige Befestigungen von Federn und Hebelelementen am Gehäuse des Getriebes sollten vermieden werden.

Diese Aufgabe ist nach dem kennzeichnenden Teil des Anspruchs 1 gelöst. Ein entfernt von Schwenkhebel angeordnetes Rastelement ist gegen die Rampenkontur vorgespannt. Das Rastelement steigt beim Wählen der Gasse an der Rampe auf und greift beim Schalten in der Gasse in die Rastvertiefung ein.

Weiter ausgestaltet ist die Rampenkontur mit einer zweiten Rastvertiefung. Der Rampe schließt sich an der von der ersten Rastvertiefung abgewandten Seite der Rampe eine zweite Rastvertiefung an. Die erste Rastvertiefung und die zweite Rastvertiefung nehmen die Rampe in Schwenkrichtung des Schlepphebels somit zwischen sich. In der neutralen Stellung der Schaltwelle sowie in der ersten Gasse greift das Rastelement wiederum in die erste Rastvertiefung ein. Beim Schalten des Ganges in der zweiten Gasse greift das Rastelement in die zweite Rastvertiefung ein und liegt an dem Anschlag an.

Es ist mit einer weiteren Ausgestaltung der Erfindung vorgesehen, dass an dem Schlepphebel ein Kipphebel angreift. Der Kipphebel ist das Rastelement oder trägt das Rastelement. Der Kipphebel ist mittels wenigstens einer oder mehreren Federn gegen den Schlepphebel vorgespannt. Dazu ist der Kipphebel an der Vorrichtung um eine zur Vorrichtung feste Kippachse schwenkbar angeordnet und beim Wählen der Gasse zumindest zeitweise gegen die Rampe an dem Schlepphebel vorgespannt. Der mittels des Schwenkhebels betätigte Schlepphebel schwenkt gegen den Kipphebel, wobei der Kipphebel an der Rampe anliegt. Der Kipphebel wird über die Rampe gegen die Federkräfte um die Kippachse geschwenkt. Dem Hebelsystem Schwenkhebel - Schlepphebel ist der Kipphebel hinzugefügt. Die Wählkräfte an dem Schalthebel sind durch die Abstände der Kraftangriffe zu der Kippachse und durch den Einsatz von einer oder mehreren Federn, durch den Einsatz von Federn mit unterschiedlichen Kennlinien und durch die Kontur der Rampe an einer ansonsten unveränderten Vorrichtung an unterschiedliche Anwendungen anpassbar. Durch eine entsprechende Wahl der Hebellängen in dem Hebelmechanismus Schwenkhebel - Schlepphebel - Kipphebel ist in der Vorrichtung eine gute Auflösung des Kraft-Weg-Verlaufes realisierbar. D. h., auch bei kleinen Schwenkwinkeln an der Schaltwelle steht bei einer vorteilhaften Wahl der Längen der Hebel an dem die Rampe beaufschlagenden Schenkel des Kipphebels genügend Weg im Bogenmaß zur Verfügung, um die Rampen und Vertiefungen an der Rampenkontur fertigungs- und funktionsgerecht zu gestalten.

Es ist vorgesehen, dass der Kipphebel eine an dem Kipphebel befestigte sowie um eine Rotationsachse drehbare Rolle aufweist. Die Rolle ist das Rastelement. Der Kipphebel greift über die Rolle an dem Schlepphebel an. Die Rotationsachse der Rolle und die Kippachse des Kipphebels verlaufen parallel zueinander.

Eine Ausgestaltung der Erfindung sieht vor, dass das Rastelement eine Kugel ist. Die Kugel ist mittels einer oder mehrerer Federn gegen die Rampenkontur vorgespannt. Die Kugel ist vorzugsweise in eine der allgemein bekannten und in Fahrzeuggetrieben eingesetzten Arretierungen aufgenommen.

Die Reibung zwischen der Rampe und dem Kipphebel ist vermindert, wenn der Kipphebel mit einer Rolle an der Rampe angreift, oder wenn eine Kugel als Rastelement eingesetzt ist. Der Kipphebel verrastet mit der Rolle alternativ in der ersten oder zweiten Rastvertiefung.

Der Schlepphebel und das Rastelement sind in ein Schaltmodul integriert, das mehrere der Schaltschienen, z. B. zum Schalten von mindestens vier Vorwärtsgängen und einem Rückwärtsgang, aufnimmt. Die Vorrichtung für das Erzeugen einer Gegenkraft ist für die Gasse des Rückwärtsganges eingesetzt. Die Schaltwelle ist dabei aus der neutralen Stellung zunächst in eine erste Gasse zum Schalten von zwei Vorwärtsgängen und dann mit gleichem Richtungssinn weiter über die erste Gasse hinaus in die Gasse des Rückwärtsganges schwenkbar.

Die Erfindung ist nachfolgend anhand von Ausführungsbeispielen näher erläutert, wobei weitere Ausgestaltungen der Erfindung beschrieben sind.

### Kurze Beschreibung der Zeichnungen

Es zeigen:
- Figur 1: ein teilweise dargestelltes Schaltmodul mit einem Ausführungsbeispiel der Vorrichtung zum Erzeugen einer Gegenkraft an der Schaltwelle, wobei die Schaltwelle in einer neutralen Stellung steht,
- Figur 2: das Schaltmodul nach Figur 1 mit der in die Gasse I-II geschwenkten Schaltwelle,
- Figur 3: das Schaltmodul nach Figur 1, wobei der Rückwärtsgang geschaltet ist,
- Figur 4: eine alternative Darstellung des Kipphebels der Vorrichtung,
- Figur 5: eine schematische Darstellung einer Exzenter-Stelleinrichtung des Kipphebels,
- Figur 6: ein Schaltschema eines Wechselgetriebes,
- Figur 7: eine Seitenansicht der Führung, mit dem Schwenkhebel aus Figur 1 in der Gasse I-II,
- Figur 8: eine Draufsicht auf den teilweise dargestellten Schwenkhebel aus Figur 1,
- Figur 9: ein Ausführungsbeispiel eines Schlepphebels mit einer Rastvertiefung an der Rampenkontur und
- Figur 10: ein Ausführungsbeispiel eines Schlepphebels mit zwei Rastvertiefungen an der Rampenkontur, wobei an dem Schlepphebel ein Rastelement in Form einer Kugel wirkt.

### Detaillierte Beschreibung der Zeichnungen

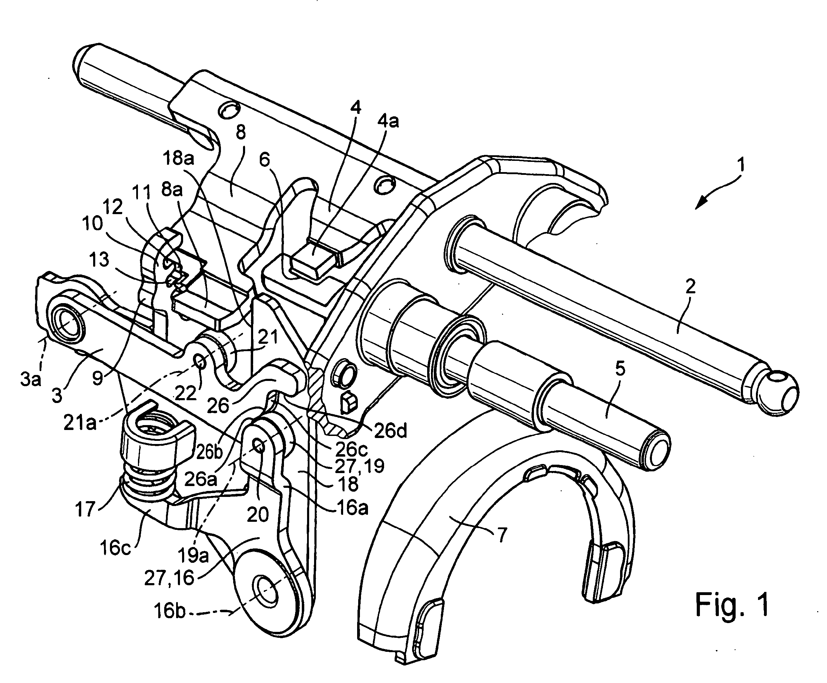

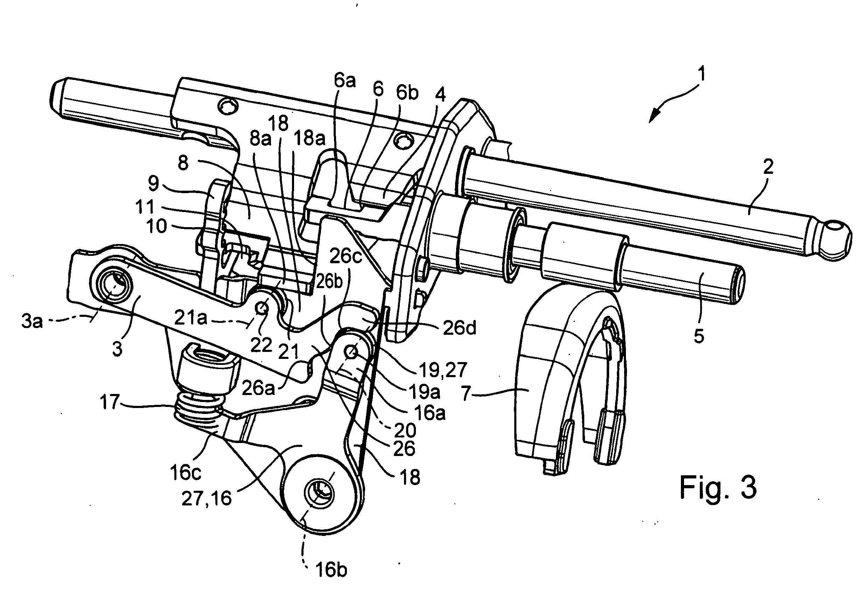

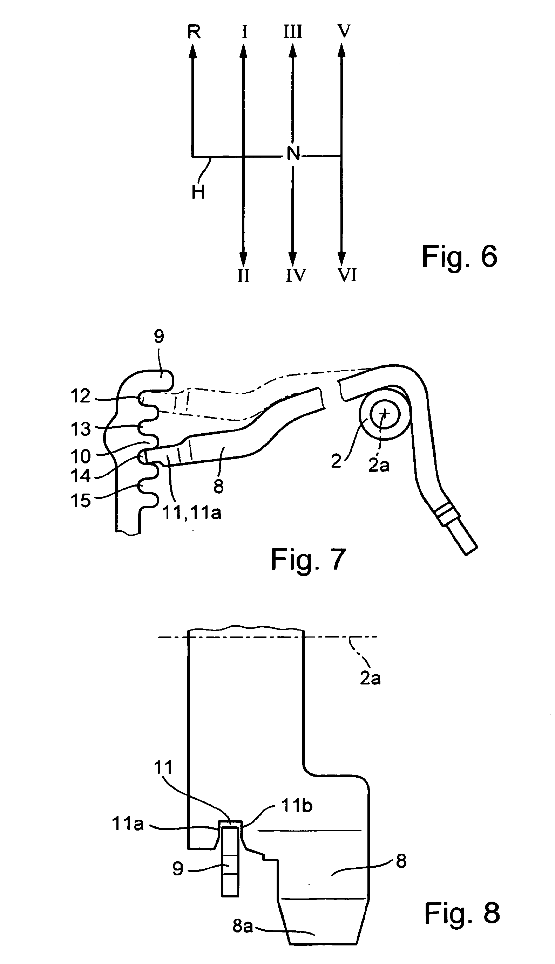

Figur 6 zeigt ein mögliches Schaltschema eines nicht dargestellten Wechselgetriebes. Dem Wechselgetriebe ist ein in den Figuren 1 bis 3 dargestelltes Ausführungsbeispiel einer Vorrichtung 1 zum Erzeugen einer Gegenkraft an einem zu einer Schaltwelle 2 festen Schwenkhebel 3 zugeordnet. Entlang der horizontalen Linie H (Figur 6) in dem Schaltschema ist, beispielsweise durch Schwenkbewegungen an einem Handschalthebel eine der Gassen I-II, III-IV, V-VI sowie R wählbar. Die neutrale Schaltstellung N auf der Linie H entspricht dabei gleichzeitig einer Position in der Gasse III-IV. In den Gassen ist wahlweise einer der jeweiligen Gasse zugeordneten Vorwärtsgänge oder der Rückwärtsgang entlang der vertikalen Linien schaltbar.

Die Halterungen der Vorrichtung 1 sind relativ zu dem nicht dargestellten Schaltgetriebe bewegungsfest. Die Schaltwelle 2 ist relativ zu der Vorrichtung 1 schwenkbar und entlang ihrer Längsmittelachse 2a verschiebbar. Der Wählvorgang zur Wahl einer der Gassen schwenkt die Schaltwelle 2. Mit dem sich an den Wählvorgang anschließenden Schaltvorgang zum Schalten eines der Gänge aus der gewählten Gasse ist die Schaltwelle 2 längs entlang der Längsmittelachse 2a verschiebbar.

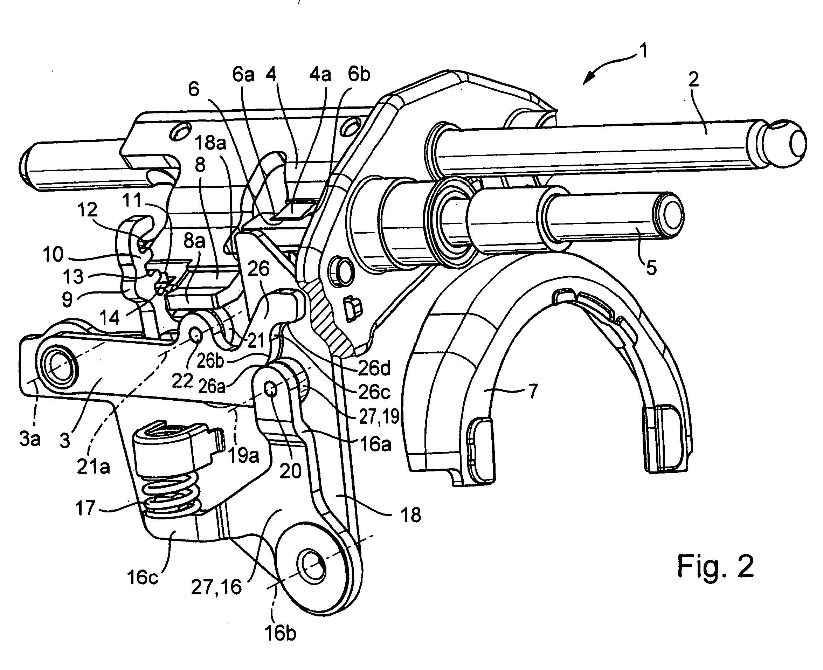

An der Schaltwelle 2 sind fest Schaltfinger angeordnet, von denen nur der Schaltfinger 4 zum Einlegen des ersten bzw. zweiten Ganges sowie des Rückwärtsganges in Figur 1 und 2 bildlich dargestellt ist. In der Stellung N steht der Schaltfinger 4 über einem Schaltmaul 6 einer Schaltschiene 5 (Figur 1). An der Schaltschiene 5 ist üblicherweise eine Schaltgabel 7 befestigt. Der Wählvorgang in die Gasse I-II schwenkt die Schaltwelle 2 mit dem Schaltfinger 4 um die Längsmittelachse 2a. Das Ende 4a des Schaltfingers 4 taucht so in das Schaltmaul 6 ein, dass die Flanken 6a, 6b des Schaltmaules das Ende 4a des Schaltfingers 4 zwischen sich nehmen (Figur 2). Mit dem sich an den Wählvorgang anschließenden Schaltvorgang wird die Schaltwelle 2 entlang ihrer Längsmittelachse 2a zur Vorrichtung 1 verschoben. Der Schaltfinger 4 beaufschlagt je nach Verschieberichtung eine der Flanken 6a, 6b des Schaltmaules 6. Die Schaltschiene 5 wird somit synchron mit der Schaltwelle 2 verschoben und der erste bzw. der zweite Gang geschaltet.

Weiterhin weist die Schaltwelle 2 einen Schwenkhebel 8 auf, der in der beschriebenen Anwendung gleichzeitig mit einer Kulisse 10 an einer Führung 9 zusammenwirkt. Der Schwenkhebel 8 und der Schaltfinger 4 sind einteilig an einem Blechformteil ausgebildet. Die Führung 9 ist in dem Bewegungsraum des mit der Schaltwelle 2 schwenkenden sowie mit der Schaltwelle 2 verschiebbaren Schwenkhebels 8 angeordnet. Bei dem Wählvorgang schwenkt der Schwenkhebel 8 mit dem Schaltfinger 4 synchron um die Längsmittelachse 2a. Dabei greift die Führung 9 in einen Schlitz 11 an dem Schwenkhebel 8 ein. Der Schlitz 11 ist an dem Schwenkhebel 8 so ausgebildet, dass der Schwenkhebel 3 bei einer Wählbewegung entlang der Linie H zu der Führung 9 ungehindert schwenkt. Die Führung 9 durchdringt dabei den Schlitz 11 (Figur 8). Der Schwenkhebel 8 und somit die Schaltwelle 2 sind über die der Führung 9 zugewandten Flanken 11a,11b des Schlitzes 11 an der Führung 9 schwenkbar geführt. Eine Längsbewegung des Schwenkhebels 3 zur Führung 9 ist nicht möglich, da die Flanken 11a,11b des Schlitzes die Führung 9 längs zwischen sich nehmen (Figur 8). Die Schaltwelle 2 schwenkt bei Wählbewegungen bis der Schwenkhebel 8 eine Position einnimmt, in der einer der an der Schaltwelle 2 angeordneten Schaltfinger in eine der gewählten Gassen in eine Schaltschiene eingreift. Der Schlitz 11 an dem geschwenkten Schwenkhebel 8 steht in den Gassen jeweils einer der Nuten 12, 13, 14, 15 an der Kulisse 10 gegenüber. Der Schwenkhebel 8 ist erst in einer der gewählten Gassen zu der Führung 9 längs beweglich, wenn eine der Flanken 11a, 11b des Schlitzes 11 und damit der Schwenkhebel 8 längs in eine der Nuten 12, 13, 14, 15 eindringen kann. Der Schwenkhebel 8 durchfährt dabei eine der Nuten 12, 13, 14, 15, ohne an der Führung 9 anzuschlagen.

In den Nuten 12, 13, 14, 15 ist der Schwenkhebel 2 in Abhängigkeit von der gewählten Gasse während des Schaltens einer der Gänge geführt. Schwenkbewegungen des Schwenkfingers 8 und somit der Schaltfinger sind während des Schaltens in der Gasse nicht möglich, da die Flanken 12a, 12b, 13a, 13b, 14a, 14b, 15a, 15b der jeweiligen Nut 12, 13, 14, 15 den Schwenkhebel 8 in Schwenkrichtung zwischen sich nehmen. In Figur 7 sind der Schwenkhebel 2 und die Führung 9 im Detail dargestellt. Der Schwenkhebel 8 ist in der Nut 13 bei Schaltbewegungen innerhalb der Gasse III-IV aus der neutralen Schaltstellung N in den dritten oder vierten Gang und in der Nut 12 bei Schaltbewegungen innerhalb der Gasse V-VI in den fünften oder sechsten Gang geführt. Bei Schaltbewegungen innerhalb der Gasse I-II in den ersten oder zweiten Gang durchfährt der Schwenkhebel 8 die Nut 14 und beim Schalten des Rückwärtsganges R die Nut 15.

In der Stellung N steht der Schwenkhebel 8 in einer Ausgangsstellung zur Nut 13. Wird der Schwenkhebel bei einer Wählbewegung in die Gasse I-II von der Nut 13 weggeschwenkt, ist somit auch der Schaltfinger 4 frei schwenkbar und taucht schließlich in das Schaltmaul 6 ein. Diese Bewegung entspricht einer Schaltbewegung in dem Schaltschema nach Figur 6 aus der Position N entlang der Linie H. Der Schwenkhebel 8 folgt der Bewegung des Schaltfingers 4 bei einer sich dem Wählvorgang anschließenden Schaltbewegung und durchfährt die Nut 14 längs ungehindert, bis der erste oder zweite Gang geschaltet ist.

Die Vorrichtung 1 zum Erhöhen der Wählkraft weist einen Schlepphebel 3 auf. Der Schlepphebel 3 ist um eine Schwenkachse 3a relativ zu der Längsmittelachse 2a schwenkbar. Beim Schalten des ersten oder zweiten Ganges in der Gasse I-II, beim Wählen der Gasse R sowie beim Schalten des Rückwärtsganges steht der Schlepphebel 3 mit einem Ende 8a des Schwenkhebels 8 in einer Wirkverbindung. Weiterhin ist die Vorrichtung mit einem Kipphebel 16 und einer Feder 17 versehen. Der Kipphebel 16 steht in einer Wirkverbindung mit dem Schlepphebel 3. Dazu liegt der Kipphebel 16 mit einem Ende eines Schenkels 16a an dem Schlepphebel 3 an und ist dabei mittels der Feder 17 gegen den Schlepphebel 3 vorgespannt. Die Feder 17 greift zu einer Kippachse 16b des Kipphebels 16 beabstandet an einem Schenkel 16c des Kipphebels 16 an. Der Kipphebel 16 und die Feder 17 stützen sich an einer Konsole 18 der Vorrichtung 1 zu dem nicht dargestellten Getriebe ab. Der Kipphebel 16 liegt an einem Ende des Schlepphebels 3 mittels einer Rolle 19 an. Die Rolle 19 ist mit einem Bolzen 20 um die Rotationsachse 19a der Rolle drehbar sowie zu der Kippachse 16b beabstandet an dem Kipphebel 16 befestigt. Der Kipphebel 16 oder die Rolle 19 sind das Rastelement 27. Der Schlepphebel 3 ist mit einer Ablaufrolle 21 versehen. Die Ablaufrolle 21 ist von der Schwenkachse 3a entfernt mittels eines Bolzens 22 um eine Drehachse 21a drehbar an dem Schlepphebel 3 befestigt. Die Ablaufrolle 21 ragt in die Schwenkbahn des Endes 8a des Schwenkhebels 8 hinein. Die Drehachse 21 a der Ablaufrolle 21, die Rotationsachse 19a der Rolle 19 und die Kippachse 16b des Kipphebels 16 sind parallel zueinander ausgerichtet.

Der Kipphebel 16 liegt mit der Rolle 19 an einer Rampenkontur 26 des Schlepphebels 3 an. Die Rampenkontur 26 weist eine erste Rastvertiefung 26a sowie eine zweite Rastvertiefung 26c auf. In den Gassen I-II, III-IV und V-VI ist die Rolle 19 mittels der am Kipphebel 16 unter- oder übersetzten Kraft der Feder 17 in der ersten Rastvertiefung 26a verrastet. Der Kipphebel 16 arretiert über die Rolle 19 in der ersten Rastvertiefung 26a den Schlepphebel 3 unbeweglich zur Konsole 18. Der beim Wählvorgang aus der Stellung N in die Gasse I-II um die Längsmittelachse 2a schwenkende Schwenkhebel 8 trifft mit seinem Ende 8a auf die Ablaufrolle 21, ohne dass der Schwenkhebel 8 den Schlepphebel 3 um die Schwenkachse 3a schwenkt. In der Gasse I-II liegt das Ende 8a des Schwenkhebels 8 an der Ablaufrolle 21 an. Die Ablaufrolle 21 und der Schwenkhebels 8 berühren sich in der Gasse I-II nur leicht. Die Stellung des Schlepphebels 3 ist dabei so justiert, dass der Schwenkhebel 8 bei Schaltbewegungen in der Gasse I-II längs ungehindert durch die Nut 14 der Führung 9 beweglich ist. Die Ablaufrolle 21 wälzt sich dabei um die Drehachse 21 a drehend an dem sich mit der Schaltwelle 2 längsbewegenden Ende 8a ab. Die Schaltwelle 2 ist mittels der Ablaufrolle 21 beim Schalten in den ersten oder zweiten Gang komfortabel geführt. Der Schaltvorgang in den ersten oder zweiten Gang wird durch diese rollengelagerte Gassenführung komfortabel.

Das Wählen entlang der Linie H über die Gassen I-II hinaus beaufschlagt den Schlepphebel 3 an der Ablaufrolle 21 mittels des Schwenkhebels 8. Der Schlepphebel 3 schwenkt unter dieser Zwangsbewegung um die Schwenkachse 3a und gegen die Rolle 19. Die Wählbewegung wirkt dadurch gegen die Kraft der Feder 17 an dem Kipphebel 16. Dabei steigt die Rolle 19 aus der ersten Rastvertiefung 26a anfangs an der Rampe 26b in Richtung der zweiten Rastvertiefung 26c auf. Der Kipphebel 16 schwenkt gleichzeitig um die Kippachse 16b gegen die Feder 17. Der Widerstand gegen die Schwenkbewegung an dem Schwenkhebel 8 nimmt durch die Feder 17 und die an der Rampe 26b aufsteigende Rolle 19 zu. An dem nicht dargestellten Handschalthebel im Fahrzeug wird dem Bediener durch einen Anstieg der Schaltkraft signalisiert, dass er im Begriff ist die Gasse des Rückwärtsganges einzuwählen.

Die Kennlinie der Feder 17, die Lage der Feder 17 zu der Kippachse 16b, die Lage der Rotationsachse 19a zu der Kippachse 16b sowie der Anstieg der Rampe 26b bestimmen den Verlauf und den Anstieg der Kraft am Schalthebel.

Der Schwenkhebel 8 schwenkt zur Wahl der Gasse des Rückwärtsganges aus der Gasse I-II und beaufschlagt den Schlepphebel 3, der dadurch um die Schwenkachse 3a schwenkt. Die Rolle 19 steigt aus der ersten Rastvertiefung 26a auf die Rampe 26b auf und rollt weiter auf der Rastkontur 26 ab, bis die Rolle 19 in der zweiten Rastvertiefung 26c verrastet. Dabei verlässt die Rolle 19 die Rampe 26b. Der Widerstand an dem Schwenkhebel 8 lässt nach, da die Rolle 19 auf dem Weg in die zweite Rastvertiefung auf der Rampenkontur 26 abwärts rollt. An dem Handschalthebel sinkt die Wählkraft wieder auf ein geringeres Niveau. Aus dieser Position kann der Schwenkhebel 8 einer Schaltbewegung zum Schalten des Rückwärtsganges in der Nut 15 geführt ungehindert folgen.

In der Gasse R bewegt sich der Schwenkhebel 8 beim Schalten des Rückwärtsganges längs zu dem Schlepphebel 3. Die Ablaufrolle 21 läuft, sich um die Drehachse 21a drehend, an dem sich längs bewegenden Ende 8a des Schwenkhebels 8 ab. Der Schaltvorgang in den Rückwärtsgang wird durch diese rollengelagerte Gassenführung komfortabel.

Die Schwenkbewegungen des Schwenkhebels 8 während des Wählens der Gasse R und die Längsbewegung des Schwenkhebels 8 beim Schalten des Rückwärtsganges sind begrenzt. Der Schwenkweg des Schwenkhebels 8 ist mittels eines Anschlages 26d an der Rampenkontur 26 begrenzt. Der Anschlag 26d begrenzt die zweite Rastvertiefung 26c an der von der Rampe 26b abgewandten Seite. Der Anschlag 26d verhindert, dass die Rolle 19 über die zweite Rastvertiefung 26c aus der Gasse R hinaus bewegbar ist. Eine Bewegung des Schalthebels über die Gasse R entlang der Linie H ist verhindert. Der Schwenkhebel 8 schlägt längs an einem den Schwenkhebel 8 längs im Wege liegenden weiteren Anschlag 18a an, wenn der Rückwärtsgang geschaltet ist. Dieser Anschlag 18a ist an der Konsole 18 ausgebildet und verhindert eine Schaltbewegung am Schalthebel über die Schaltstellung des Rückwärtsganges hinaus.

Bei der Montage der Vorrichtung 1 ist die Stellung des Schlepphebels 3 zu dem Schwenkhebel 8 durch Justieren der Lage der Kippachse 16b zu der Lage der Schwenkachse 3b mittels einer Exzenter-Stelleinrichtung abgesichert. Die Stellung des Schlepphebels 3 ist in der Gasse I-II so justiert, dass der Schwenkhebel 8 bei Schaltbewegungen in der Gasse I-II längs ungehindert durch die Nut 14 der Führung 9 beweglich ist. Die Ablaufrolle 21 läuft, ohne nennenswerte Vorspannung gegen das Hebelende 8a, an dem sich längs bewegenden Ende 8a des Schwenkhebels 8 ab. Die Exzenter-Stelleinrichtung mit einem scheibenförmigen Exzenter 23 ist in Figur 7 schematisch dargestellt. Die Exzenterachse 23a durchdringt die Kippebene des Kipphebels 16 senkrecht. Der Kipphebel 16 ist mit einer kreisrunden Bohrung 16d versehen. In diese Bohrung 16d ist der Exzenter 23, mit einer der Bohrung 16d angepassten zylindrischen Außenkontur eingesetzt. Der Kipphebel 16 kippt bzw. schwenkt auf dem zu der Konsole 18 festen Exzenter 23 um die Kippachse 16b. Die Kippachse 16b ist die Mittenachse der Bohrung 16d. Die Exzenterachse 23a ist zu der Kippachse 16b exzentrisch angeordnet.

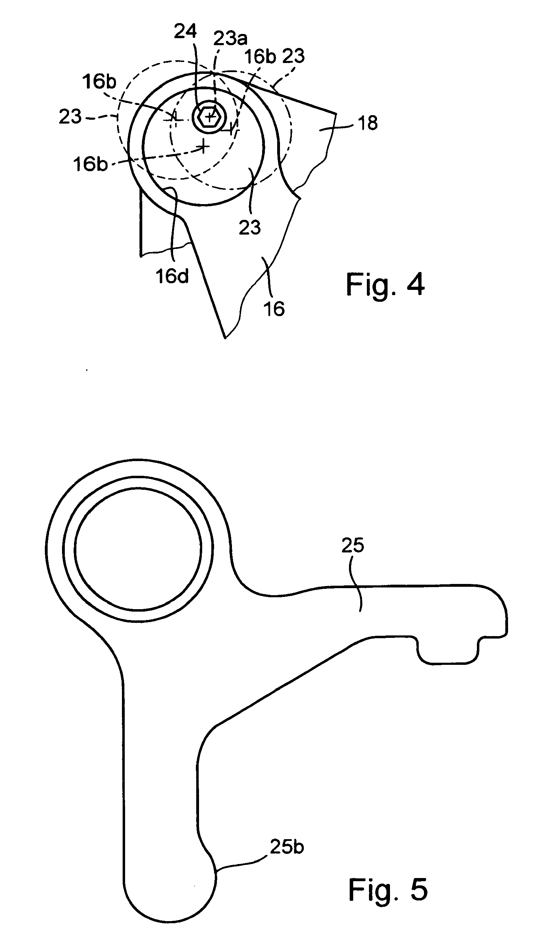

Der Exzenter 23 greift bei der Montage des Kipphebels 16 um die Exzenterachse 23a zunächst schwenkbar an der Konsole 18 an. Mit dem Schwenken des Exzenters 23 um die Exzenterachse 23a schwenkt auch die Kippachse 16b um die Exzenterachse 23a. Die Lage der Kippachse 16b des Kipphebels 16 ist mittels Schwenkbewegungen des Exzenters 23 zu der Lage der Schwenkachse 3a des Schlepphebels einstellbar. Wahlstellungen des Exzenters sind in Figur 5 mit unterbrochener Linie dargestellt. Ist die Lage des Kipphebels 16 zu dem Schlepphebel 3 in gewünschter Weise justiert, wird der Exzenter 23 an der Konsole unbeweglich befestigt. Der Exzenter 23 ist z. B. mittels einer Schraubverbindung an der Konsole 18 befestigt. Die Mittenachse der Schraubverbindung verläuft dabei mit der Exzenterachse 23a. Bei der Montage des Exzenters 23 an die Konsole 18 wird der Exzenter 23 mittels der Schraube 24 zunächst an die Konsole 18 schwenkbar geheftet. Die Stellung des Kipphebels 16 und des Schlepphebels 3 werden zunächst durch Schwenken um die Schraube 24 justiert und im Anschluss wird die Schraube angezogen, bis der Exzenter 23 zur Konsole 18 unbeweglich fest ist. Alternativ ist die Befestigung des Exzenters mittels einer Pressverbindung vorgesehen. Der Exzenter bzw. die Konsole weisen dazu einen Zapfen mit einer zylindrischen Außenmantelfläche auf. Die Mittelachse des Zapfens ist die Exzenterachse 23a. Der Zapfen wird bei der Montage des Kipphebels 16 zunächst an einem kreisrunden Loch vorzentriert und die Stellungen der Hebel 3 und 16 zueinander justiert. Anschließend wird der Zapfen in die Bohrung eingepresst und sitzt somit fest an der Konsole.

Die verschiedenen Hebel und die Konsole der Vorrichtung zum Erhöhen der Wählkraft sind vorzugsweise aus Blech durch Stanzen, Biegen und Prägen hergestellt. In einfacheren Vorrichtungen wird auf die Ablaufrolle bzw. die Rolle verzichtet. So ist z. B. mit einer Ausgestaltung der Erfindung vorgesehen und in Figur 5 dargestellt, dass der Kipphebel 25 anstelle einer Rolle eine an einem Schenkel 25a nach außen gewölbte Kontur 25b aufweist. Mit der nach außen gewölbten Kontur 25b fährt der geschwenkte Kipphebel 25 an einer Rampenkontur eines Schlepphebels entlang und verrastet in Rastvertiefungen an der Rampenkontur.

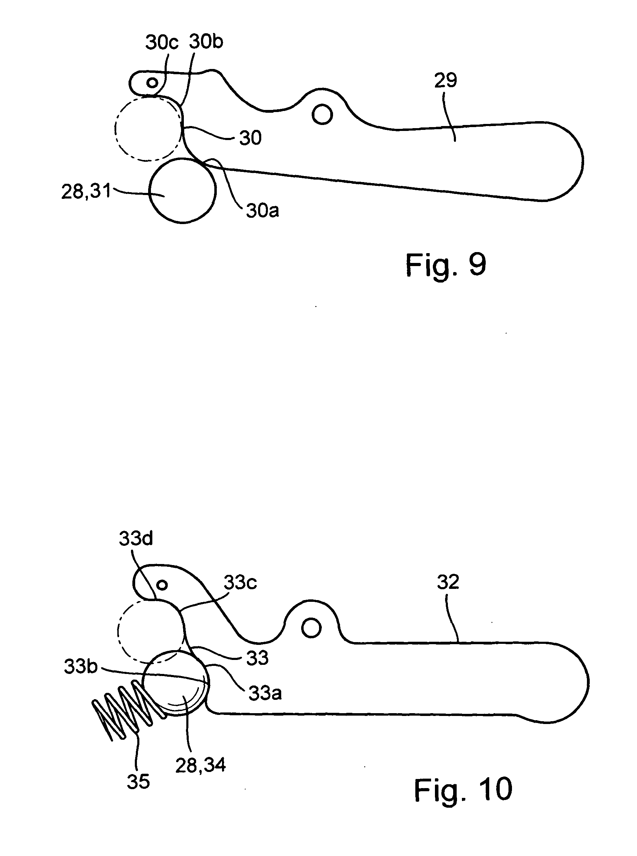

Figur 9 zeigt ein Ausführungsbeispiel eines Schlepphebels 29 mit einer Rampenkontur 30. Die Rampenkontur 30 weist eine Rampe 30a, eine Rastvertiefung 30b und einen Anschlag 30c auf. Auf die Rampenkontur 30 wirkt ein Rastelement 28 in Form einer Kugel 31. Beim Wählen einer Gasse steigt die Kugel 31 an der Rampe 30a auf. Außerdem ist die Kugel 31 mit einer unterbrochenen Linie in der Rastvertiefung 30b verrastet dargestellt. In dieser Stellung ist die Gasse gewählt und ein Gang wird geschaltet.

Figur 10 zeigt ein weiteres Ausführungsbeispiel eines Schlepphebels 32. Der Schlepphebel 32 ist mit einer Rampenkontur 33 versehen. Die Rampenkontur 33 weist eine Rampe 33a, eine erste Rastvertiefung 33b, eine zweite Rastvertiefung 33c sowie einen Anschlag 33d auf. Die Rampe 33a schließt sich der ersten Rastvertiefung 33b an. Die erste Rastvertiefung 33b und die zweite Rastvertiefung 33c nehmen die Rampe 33a in Schwenkrichtung des Schwenkrichtung des Schwenkhebels gesehen zwischen sich. Auf die Rampenkontur 33 wirkt ein Rastelement 28 in Form einer Kugel 34. Die Kugel 34 ist mittels einer Feder 35 gegen die Rampenkontur 33 vorgespannt. In der Darstellung nach Figur 10 ist die Kugel 34 in der ersten Rastvertiefung 33b verrastet. Aus der ersten Rastvertiefung 33b ist die Kugel 34 über die Rampe 33a in die zweite Rastvertiefung 33c bewegbar (mit unterbrochener Linie dargestellt). In der zweiten Rastvertiefung 33c liegt die Kugel 34 an dem Anschlag 33d an.

### Bezugszeichen

- 1: Vorrichtung
- 2: Schaltwelle
- 2a: Längsmittelachse
- 3: Schlepphebel
- 3a: Schwenkachse
- 4: Schaltfinger
- 4a: Ende
- 5: Schaltschiene
- 6: Schaltmaul
- 6a: Flanke
- 6b: Flanke
- 7: Schaltgabel
- 8: Schwenkhebel
- 8a: Ende
- 9: Führung
- 10: Kulisse
- 11: Schlitz
- 11a: Flanke
- 11 b: Flanke
- 12: Nut
- 13: Nut
- 14: Nut
- 15: Nut
- 16: Kipphebel
- 16a: Schenkel
- 16b: Kippachse
- 16c: Schenkel
- 16d: Bohrung
- 17: Feder
- 18: Konsole
- 18a: Anschlag
- 19: Rolle
- 19a: Rotationsachse
- 20: Bolzen
- 21: Ablaufrolle
- 21a: Drehachse
- 22: Bolzen
- 23: Exzenter
- 23a: Exzenterachse
- 24: Schraube
- 25: Kipphebel
- 25b: Kontur
- 26: Rampenkontur
- 26a: Rastvertiefung
- 26b: Rampe
- 26c: Rastvertiefung
- 26d: Anschlag
- 27: Rastelement
- 28: Rastelement
- 29: Schlepphebel
- 30: Rampenkontur
- 30a: Rampe
- 30b: Rastvertiefung
- 30c: Anschlag
- 31: Kugel
- 32: SGhlepphebel
- 33: Rampenkontur
- 33a: Rampe
- 33b: Rastvertiefung
- 33c: Rastvertiefung
- 34: Kugel
- 35: Feder

## Patentansprüche

1. Schaltmodul, umfassend eine Schaltwelle (2) mit einem zu dieser festen Schwenkhebel (8) und eine Vorrichtung (1) zum Erzeugen einer Gegenkraft an dem Schwenkhebel (8), die einen Schlepphebel (3, 29, 32) umfasst, wobei die Schaltwelle (2) zur Wahl mindestens einer Gasse aus einer neutralen Stellung in der Vorrichtung (1) schwenkbar sowie zum Schalten wenigstens eines Ganges in der Gasse zur Vorrichtung (1) längs verschiebbar ist, und wobei der Schwenkhebel (8) bei der Wahl der Gasse zumindest zeitweise den um eine Schwenkachse (3a) in zwei Schwenkrichtungen schwenkbaren sowie mit einer Rampe (26b, 30a, 33a) versehenen Schlepphebel (3, 29, 32) gegen an der Rampe (26b, 30a, 33a) umgesetzte Federkräfte beaufschlagt, wobei die Rampe (26b, 30a, 33a) an einer Rampenkontur (26, 30, 33) des Schlepphebels (3, 29, 32) ausgebildet ist, wobei die Rampenkontur (26, 30, 33) die Rampe (26b, 30a, 33a) und zumindest eine Rastvertiefung (26a, 26c, 30b, 33b) aufweist und wobei sich die Rastvertiefung (26a, 26c, 30b, 33b) der Rampe (26b, 30a, 33a) in eine der Schwenkrichtungen des Schlepphebels (3, 29, 32) anschließt, **dadurch gekennzeichnet, dass** die Vorrichtung ein gegen die Rampenkontur (26, 30, 33) vorgespanntes und entfernt vom Schwenkhebel angeordnetes Rastelement (27,28) umfasst, wobei das Rastelement (27, 28) beim Wählen der Gasse an der Rampe (26b) aufsteigt sowie beim Schalten in der Gasse in die Rastvertiefung (26a, 30a, 33a) eingreift.

2. Schaltmodul nach Anspruch 1, **dadurch gekennzeichnet, dass** die Rampenkontur (26, 33) eine erste Rastvertiefung (26a, 33b), eine zweite Rastvertiefung (26c, 33c) sowie einen Anschlag (26d, 33d) aufweist, wobei sich die Rampe (26b, 33a) der ersten Rastvertiefung (26a, 33b) anschließt und wobei die erste Rastvertiefung (26a, 33b) und die zweite Rastvertiefung (26c, 33c) die Rampe (26b, 33a) in Schwenkrichtung des Schlepphebels (3, 32) zwischen sich nehmen und dass das Rastelement (27, 28) in einer ersten Gasse in die erste Rastvertiefung (26a, 33b) eingreift, wobei das Rastelement (27, 28) beim Wählen einer zweiten Gasse aus der ersten Rastvertiefung (26a, 33b) an der Rampe (26b, 33a) aufsteigt und wobei das Rastelement (27, 28) in der zweiten Gasse in die zweite Rastvertiefung (26c) eingreift und dabei an dem sich der zweiten Rastvertiefung (26c, 33c) anschließenden Anschlag (26d, 33d) anliegt.

3. Schaltmodul nach Anspruch 2, **dadurch gekennzeichnet, dass** die Schaltwelle (2), das Rastelement (28) und der Schlepphebel (3, 32) in dem Schaltmodul zum Schalten von mindestens vier Vorwärtsgängen und einem Rückwärtsgang aufgenommen sind, wobei die Vorrichtung (1) zum Erzeugen einer Gegenkraft bei der Wahl einer Gasse für das Schalten des Rückwärtsganges vorgesehen ist und dass die Schaltwelle (2) aus der neutralen Stellung zunächst in eine erste Gasse zum Schalten von zwei Vorwärtsgängen und dann mit gleichem Richtungssinn über die erste Gasse hinaus in die Gasse des Rückwärtsganges schwenkbar ist, wobei das Rastelement (27, 28) in der ersten Gasse in die erste Rastvertiefung (26a, 33b) sowie in der Gasse des Rückwärtsganges in die zweite Rastvertiefung (26c, 33c) eingreift.

4. Schaltmodul nach Anspruch 1, **dadurch gekennzeichnet, dass** der Schwenkhebel (8) bei der Wahl der Gasse den Schlepphebel (3, 29, 32) gegen an der Rampe (26b, 30a) umgesetzte Federkräfte von wenigstens einer das Rastelement (27, 28) gegen die Rampenkontur vorspannenden Feder (17, 35) beaufschlagt.

5. Schaltmodul nach Anspruch 4, **dadurch gekennzeichnet, dass** das Rastelement (27) ein Kipphebel (16, 25) ist, wobei der Kipphebel (16, 25) an der Rampenkontur (26) des Schlepphebels (3) angreift und wobei der Kipphebel (16, 25) mittels der die Federkräfte erzeugenden Feder (17) gegen den Schlepphebel (3) vorgespannt sowie um eine zur Vorrichtung (1) feste Kippachse (16b) schwenkbar ist und dass der Kipphebel (16, 25) beim Wählen der Gasse zumindest zeitweise gegen die Rampe (26b) vorgespannt ist, wobei der Schlepphebel (3) den Kipphebel (16, 25) an der Rampe (26b) gegen die Federkräfte um die Kippachse (16b) schwenkt.

6. Schaltmodul nach Anspruch 4, **dadurch gekennzeichnet, dass** das Rastelement (27) eine um eine Rotationsachse (19a) drehbare Rolle (19) an einem Kipphebel (16) ist, wobei der Kipphebel (16) mittels der die Federkräfte erzeugenden Feder (17) gegen den Schlepphebel (3) vorgespannt sowie um eine zur Vorrichtung (1) feste Kippachse (16b) schwenkbar ist und dass der Kipphebel (16) beim Wählen der Gasse zumindest zeitweise gegen die Rampe (26b) vorgespannt ist, wobei der Schlepphebel (3) den Kipphebel (16) an der Rampe (26b) gegen die Federkräfte um die Kippachse (16b) schwenkt.

7. Schaltmodul nach Anspruch 4, **dadurch gekennzeichnet, dass** das Rastelement (28) eine mittels der Feder (35) gegen die Rampenkontur (33) vorgespannte Kugel (34) ist.

## Claims

1. Selector unit, comprising a selector shaft (2) with a pivot lever (8) rigid therewith and a device (1) for generating a counterforce on the pivot lever (8), which comprises a drag lever (3, 29, 32), wherein the selector shaft (2) is pivotable in the device (1) for selection of at least one channel from a neutral position and displaceable longitudinally to the device (1) in order to select at least one gear in the channel, and wherein the pivot lever (8) acts in selecting the channel at least temporarily on the drag lever (3, 29, 32) pivotable about a pivotal axis (3a) in two pivotal directions and provided with a ramp (26b, 30a, 33a) against spring forces shifted on the ramp (26b, 30a, 33a), wherein the ramp (26b, 30a, 33a) is formed on a ramp contour (26, 30, 33) of the drag lever (3, 29, 32), wherein the ramp contour (26, 30, 33) has the ramp (26b, 30a, 33a) and at least one catch recess (26a, 26c, 30b, 33b) and wherein the catch recess (26a, 26c, 30b, 33b) adjoins the ramp (26b, 30a, 33a) in one of the pivotal directions of the drag lever (3, 29, 32), **characterised in that** the device comprises a catch element (27, 28) biased against the ramp contour (26, 30, 33) and disposed remote from the pivot lever, the catch element (27, 28) rising up the ramp (26b) upon selection of the channel and, upon shifting in the channel, engaging in the catch recess (26a, 30a, 33a).

2. Selector unit according to claim 1, **characterised in that** the ramp contour (26, 33) has a first catch recess (26a, 33b), a second catch recess (26c, 33c) and a stop (26d, 33d), the ramp (26b, 33a) adjoining the first catch recess (26a, 33b) and the first catch recess (26a, 33b) and the second catch recess (26c, 33c) receiving the ramp (26b, 33a) between them in the pivotal direction of the drag lever (3, 32), and **in that** the catch element (27, 28) engages in a first channel into the first catch recess (26a, 33b), in which case the catch element (27, 28), upon selection of a second channel, rises out of the first catch recess (26a, 33b) on the ramp (26b, 33a) and the catch element (27, 28) in the second channel engages into the second catch recess (26c) and thus abuts the stop (26d, 33d) adjoining the second catch recess (26c, 33c).

3. Selector unit according to claim 2, **characterised in that** the selector shaft (2), the catch element (28) and the drag lever (3, 32) in the selector unit for selecting are received by at least four forward gears and one reverse gear, in which case the device (1) for generating a counterforce in the selection of a channel is provided for selecting the reverse gear, and **in that** the selector shaft (2) is pivotable out of the neutral position first into a first channel for selecting two forward gears and then in the same direction beyond the first channel into the channel of the reverse gear, the catch element (27, 28) in the first channel engaging in the first catch recess (26a, 33b) and in the channel of the reverse gear engaging in the second catch recess (26c, 33c).

4. Selector unit according to claim 1, **characterised in that** the pivot lever (8), upon selection of the channel, acts on the drag lever (3, 29, 32) against spring forces shifted on the ramp (26b, 30a) by at least one spring (17, 35) biasing the catch element (27, 28) against the ramp contour.

5. Selector unit according to claim 4, **characterised in that** the catch element (27) is a rocker arm (16, 25), the rocker arm (16, 25) acting on the ramp contour (26) of the drag lever (3) and wherein the rocker arm (16, 25) is biased against the drag lever (3) by mans of the spring (17) generating the spring forces and is pivotable about a tilt axis (16b) fixed with respect to the device (1), and **in that** the rocker arm (16, 25), upon selection of the channel, is biased at least temporarily against the ramp (26b), in which case the drag lever (3) pivots the rocker arm (16, 25) about the tilt axis (16b) on the ramp (26b) against the spring forces.

6. Selector unit according to claim 4, **characterised in that** the catch element (27) is a roller (19) rotatable about an axis of rotation (19a) on a rocker arm (16), in which case the rocker arm (16) is biased against the drag lever (3) by means of the spring (17) generating the spring forces and is pivotable about a tilt axis (16b) fixed with respect to the device (1), and **in that** the rocker arm (16), upon selection of the channel, is biased at least temporarily against the ramp (26b), the drag lever (3) pivoting the rocker arm (16) on the ramp (26b) about the tilt axis (16b) against the spring forces.

7. Selector unit according to claim 4, **characterised in that** the catch element (28) is a ball (34) biased against the ramp contour (33) by means of the spring (35).

## Revendications

1. Module de commande, comprenant un arbre de commande (2), dont est solidaire un panneau basculant (8), et un dispositif (1) destiné à créer, sur le panneau basculant (8), une force antagoniste, ce dispositif comprenant un levier d'accompagnement (3, 29, 32), l'arbre de commande (2) pouvant, en sortant d'une position neutre dans le dispositif (1), pivoter, au choix, dans au moins une voie et se déplacer longitudinalement dans cette voie par rapport au dispositif (1), en vue de la sélection, dans cette voie, d'au moins un rapport de vitesses, le panneau basculant (8) s'appliquant selon la voie sélectionnée, et à l'encontre de forces élastiques s'exerçant sur une rampe (26b, 30a, 33a), pendant au moins une certaine durée, sur le levier d'accompagnement (3, 29, 32), lequel peut basculer autour d'un axe de pivotement (3a) dans deux directions de basculement, et qui présente également une rampe (26b, 30a, 33a), cette rampe (26b, 30a, 33a) étant définie par un contour de rampe (26, 30, 33) sur le levier d'accompagnement (3, 29, 32), le contour de rampe (26, 30, 33) présentant la rampe (26b, 30a, 33a) et au moins un creux d'arrêt (26a, 26c, 30b, 33b), le creux d'arrêt (26a, 26c, 30b, 33b) maintenant la rampe (26b, 30a, 33a) dans l'une des directions de pivotement du levier d'accompagnement (3, 29, 32), **caractérisé en ce que** le dispositif comprend un élément d'arrêt (27, 28) repoussé contre le contour de rampe (26, 30, 33), et placé à une certaine distance du levier coudé pivotant, cet élément d'arrêt (27, 28) montant sur la rampe (26b) lors de la sélection de la voie et s'insérant dans le creux d'arrêt lors de l'enclenchement dans la voie.

2. Module de commande selon la revendication 1, **caractérisé en ce que** le contour de rampe (26, 33) présente un premier creux d'arrêt (26a, 33b), un second creux d'arrêt (26c, 33c) et une butée (26d, 33d), la rampe (26b, 33a) délimitant le premier creux d'arrêt (26a, 33b), et le premier creux d'arrêt (26a, 33b) et le second creux d'arrêt (26c, 33c) définissent entre eux la rampe (26b, 33a) dans la direction de pivotement du levier d'accompagnement (3, 32), et **en ce que**, dans une première voie, l'élément d'arrêt (27, 28) s'insère dans le premier creux d'arrêt (26a, 33b), l'élément d'arrêt (27, 28), lors de la sélection d'une seconde voie, montant sur la rampe (26b, 33a) en sortant du premier creux d'arrêt (26a, 33b), l'élément d'arrêt (27, 28), dans la seconde voie, s'insérant dans le second creux d'arrêt (26c), et se plaçant alors contre la butée (26d, 33d) délimitant le second creux d'arrêt (26c, 33c).

3. Module de commande selon la revendication 2 , **caractérisé en ce que** l'arbre de commande (2), l'élément d'arrêt (28) et le levier d'accompagnement (3, 32) du module de commande sont agencés en vue de la sélection d'au moins quatre rapports de vitesses avant et d'une marche arrière, le dispositif (1) étant prévu pour créer une force antagoniste lors du choix d'une voie pour la sélection de la marche arrière, et **en ce que** l'arbre de commande (2) peut basculer, en sortant de la position neutre, d'abord dans une première voie, en vue de la sélection de deux rapports avant, puis dans le même sens, en sortant au-delà de la première voie, dans la voie de la marche arrière, l'élément d'arrêt (27, 28), dans la première voie, s'insérant dans le premier creux d'arrêt (26a, 33b), et, dans la voie de la marche arrière, s'insérant dans le second creux d'arrêt (26c, 33c).

4. Module de commande selon la revendication 1, **caractérisé en ce que** le panneau basculant (8), lors du choix de la voie, applique le levier d'accompagnement (3, 29, 32), à l'encontre des forces élastiques exercées sur la rampe (26b, 30a) par au moins l'un des éléments d'arrêt (27, 28), contre le ressort (17, 35) repoussant le contour de rampe.

5. Module de commande selon la revendication 4, **caractérisé en ce que** l'élément d'arrêt (27) est un levier coudé pivotant (16, 25), ce levier coudé pivotant (16, 25) s'insérant dans le contour de rampe (26) du levier d'accompagnement (3), et ce levier coudé pivotant (16, 25) repoussant le levier d'accompagnement (3) grâce aux forces élastiques générées par le ressort (17), tout en pouvant pivoter autour d'un axe de pivotement (16b) solidaire du dispositif (1), et **en ce que** le levier coudé pivotant (16, 25), lors du choix de la voie, est repoussé, au moins pendant une certaine durée, contre la rampe (26b), le levier d'accompagnement (3) faisant pivoter le levier coudé pivotant (16, 25) le long de la rampe (26b), à l'encontre des forces élastiques autour de l'axe de basculement (16b).

6. Module de commande selon la revendication 4, **caractérisé en ce que** l'élément d'arrêt (27) consiste en un galet rotatif (19) pouvant tourner sur le levier coudé basculant (16) autour d'un axe de rotation (19a), le levier coudé basculant (16) étant repoussé contre le levier d'accompagnement (3), tout en pouvant pivoter autour d'un axe de basculement (16b) solidaire du dispositif (1), grâce aux forces élastiques générées par le ressort (17), et **en ce que** le levier coudé basculant (16), lors du choix de la voie, est repoussé, au moins pendant une certaine durée contre la rampe (26b), le levier d'accompagnement (3) faisant basculer le levier coudé basculant (16) le long de la rampe (26b) autour de l'axe de pivotement (16b), à l'encontre des forces élastiques.

7. Module de commande selon la revendication 4, **caractérisé en ce que** l'élément d'arrêt (28) consiste en une bille (34) repoussée par le ressort (35) contre le contour de rampe (33).
